(19) Europäisches Patentamt

European Patent Office

Office européen des brevets

(11) **EP 0 956 501 B1**

(12) **FASCICULE DE BREVET EUROPEEN**

(45) Date de publication et mention de la délivrance du brevet:
**11.09.2002 Bulletin 2002/37**

(21) Numéro de dépôt: **98904239.5**

(22) Date de dépôt: **28.01.1998**

(51) Int Cl.[7]: **G01N 27/406**, F02D 41/14

(86) Numéro de dépôt international:
**PCT/FR98/00155**

(87) Numéro de publication internationale:
**WO 98/034102 (06.08.1998 Gazette 1998/31)**

(54) **DISPOSITIF DE MESURE DE LA TENEUR D'UN MILIEU GAZEUX EN OXYGENE**

GERÄT ZUR MESSUNG DES SAUERSTOTTGEHALTES IM EINEM GAS

DEVICE FOR MEASURING OXYGEN CONTENT IN A GAS MEDIUM

(84) Etats contractants désignés:
**DE ES GB IT**

(30) Priorité: **31.01.1997 FR 9701086**

(43) Date de publication de la demande:
**17.11.1999 Bulletin 1999/46**

(73) Titulaires:
- **SAGEM S.A.**
  **75016 Paris (FR)**
- **Renault s.a.s.**
  **92100 Boulogne Billancourt (FR)**

(72) Inventeurs:
- **DEKONINCK, Christophe**
  **F-95180 Menucourt (FR)**
- **DELGRANGE, Louis**
  **F-78560 Le Port-Marly (FR)**
- **HERBIN, Luc**
  **F-95530 LA FRETTE (FR)**
- **NEYRAT, Pierre**
  **F-91290 La Norville (FR)**
- **AIMARD, Frédéric**
  **F-91150 ETAMPES (FR)**
- **TAUPIN, Jean-Marie**
  **F-92140 Clamart (FR)**

(74) Mandataire: **Fort, Jacques**
**CABINET PLASSERAUD**
**84, rue d'Amsterdam**
**75009 Paris (FR)**

(56) Documents cités:
EP-A- 0 079 085     EP-A- 0 153 830
EP-A- 0 444 674     EP-A- 0 507 149
EP-A- 0 740 150     DE-A- 3 835 958
GB-A- 2 177 800     US-A- 4 272 329
US-A- 4 601 809

## Description

L'invention concerne les dispositifs de mesure de la teneur d'un milieu gazeux en oxygène, du type comprenant :

- un capteur capable de fournir une tension représentative du rapport entre une pression d'oxygène de référence et la pression d'oxygène dans un volume du capteur qui communique avec le milieu gazeux par une paroi poreuse, et
- des moyens de contrôle/commande permettant de fournir un courant de pompage destiné à faire migrer l'oxygène à partir du ou vers ledit volume.

On connaît déjà de nombreux dispositifs de ce type, tels que ceux décrits dans EP-A-0 507 149 et US-A-4 932 238. Le capteur comporte au moins un élément sensible constitué par une plaque d'électrolyte solide d'un type laissant migrer les ions oxygène, placée entre deux électrodes poreuses.

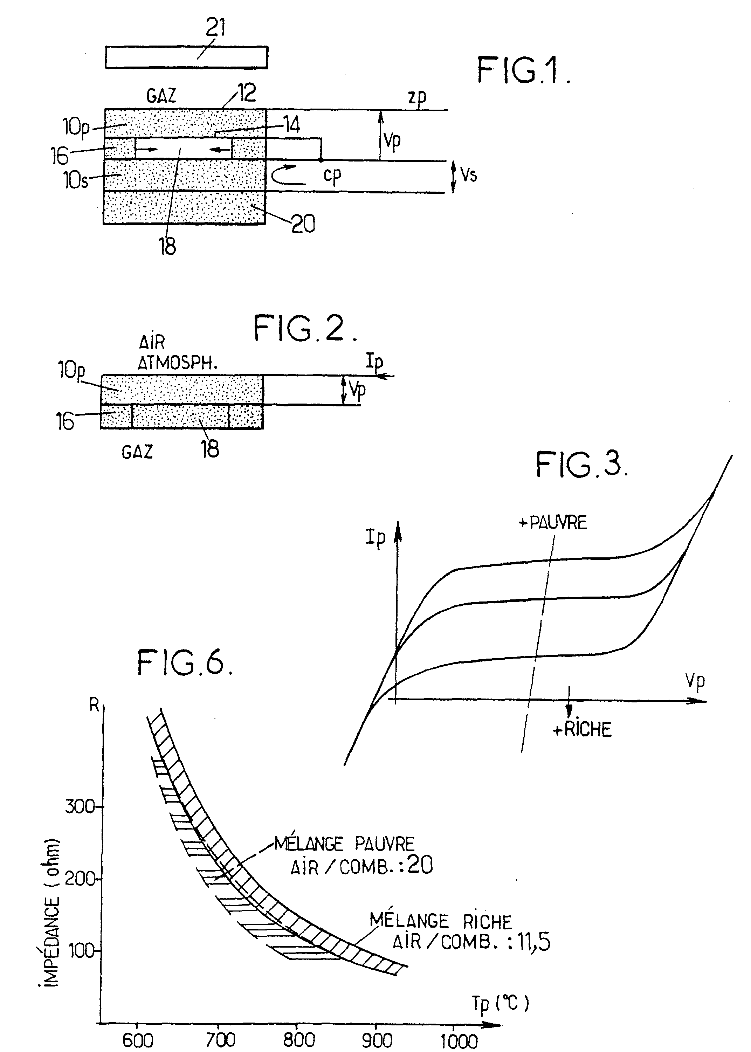

Un tel capteur est susceptible de nombreux modes de réalisation. La figure 1 montre schématiquement un capteur que l'on peut considérer comme ayant deux cellules. Une première cellule, dite cellule de pompage $10_p$, est prise en sandwich entre deux électrodes 12 et 14. La cellule de pompage $10_p$ est fixée à une deuxième cellule $10_s$, dite cellule sensible, par l'intermédiaire d'un intercalaire poreux 16, de façon à délimiter un volume 18. L'oxygène du milieu gazeux tend à pénétrer dans le volume 18 pour équilibrer les pressions partielles d'oxygène. Le passage d'un courant $I_p$ à travers la cellule de pompage tend à faire migrer l'oxygène contenu dans le volume et donc à y maintenir la pression partielle à une valeur déterminée. Une dernière plaque 20 peut être accolée à l'élément sensible $10_s$ et constituée du même matériau pour fournir une pression de référence constante ; son utilité apparaîtra plus loin.

Entre les électrodes encadrant l'élément sensible 10s apparaît ainsi une tension de mesure $V_s$ représentative du rapport entre les pressions partielles d'oxygène dans le volume 18 et dans la plaque 20 au contact de la cellule $10_s$. Des électrolytes solides appropriés, et notamment l'oxyde de zirconium dopé ou zircone, ont des caractéristiques telles que la tension $V_s$ varie de façon sensiblement logarithmique avec la pression partielle d'oxygène dans le volume 18. Classiquement, on commande le courant $I_p$ de façon à asservir $V_s$ à une valeur constante et $I_p$ est alors représentatif de la pression partielle d'oxygène dans le milieu gazeux. Une résistance chauffante 21 permet de porter les cellules à une température appropriée.

Dans un autre mode de réalisation, qu'on peut qualifier à cellule unique, représenté en figure 2, le volume 18 est délimité uniquement par l'intercalaire poreux 16 et par la cellule $10_p$. La pression partielle de référence d'oxygène est alors celle dans l'air atmosphérique, en contact avec la cellule $10_p$. Dans ce cas, la variation de $I_p$ en fonction de $V_p$, pour différentes pressions partielles d'oxygène, a l'allure générale montrée en figure 3. Dans la mesure où on veut rester dans tous les cas dans une partie rectiligne de la caractéristique, la valeur à laquelle on asservit $V_p$ doit dépendre dans une certaine mesure de la pression partielle d'oxygène dans le gaz et de l'impédance de la cellule.

L'invention trouve une application particulièrement importante dans la détermination du rapport air/combustible admis dans un moteur à combustion interne, à partir de la composition des gaz d'échappement et plus particulièrement de la pression partielle de l'oxygène résiduel dans ces gaz d'échappement.

On a surtout utilisé à ce jour des capteurs du genre montré en figure 1. Souvent les moyens de contrôle/commande sont constitués par une boucle analogique d'asservissement de $V_s$ à une valeur constante, associée à un micro-contrôleur qui déduit la pression partielle d'oxygène et la richesse instantanée du mélange de la valeur du courant $I_p$. Cette solution présente des inconvénients. La précision sur la mesure de la richesse est limitée par la précision sur la mesure de $I_p$. La réalisation sous forme câblée réduit les possibilités de réglage et d'adaptation.

La présente invention vise notamment à fournir un dispositif répondant mieux que ceux antérieurement connus aux exigences de la pratique, pour un faible coût, tout en permettant de mesurer la richesse avec précision.

Dans ce but, l'invention propose notamment un dispositif du type ci-dessus défini dans lequel les moyens de contrôle/commande ont un contrôleur numérique recevant ladite tension sur son entrée et fournissant le courant de pompage au capteur sous forme d'un courant à variation continue et progressive, non hachée, piloté par le contrôleur numérique de façon à asservir ladite tension à une valeur déterminée. L'architecture peut être telle que le micro-contrôleur dispose de moyens d'action sur le courant Ip, ce qui permet une plus grande souplesse de réglage d'asservissement, une bonne protection du capteur et une gestion plus fine de la mise en action et des modes dégradés.

Une solution avantageuse consiste à prévoir un contrôleur numérique qui fournit une tension de commande à modulation temporelle (par exemple à modulation de largeur d'impulsions) et à prévoir, à l'entrée du capteur, un filtre passe-bas et un générateur de courant. Une telle modulation est aisément réalisée à l'aide d'un contrôleur numérique. La présence du filtre évite d'appliquer, au capteur, des impulsions hachées qui réduiraient sa durée de vie.

Les capteurs ont un comportement intégrateur. Il est avantageux de le compenser en soumettant ladite tension représentative du rapport à un traitement introduisant une composante dérivée, avant application au contrôleur numérique. On augmente ainsi le rapport signal sur bruit et on permet au contrôleur de réduire le temps de réponse. Un circuit amplificateur sera en général prévu pour amplifier la composante proportionnelle, et la composante dérivée si elle est présente, avant l'application au contrôleur numérique.

L'invention est applicable aux dispositifs dont le capteur comporte une seule cellule séparant le volume qui communique avec le milieu gazeux d'une zone où règne la pression de référence ; la tension représentative est alors prélevée entre deux électrodes encadrant la cellule, et le courant de pompage est appliqué à la même cellule. Toutefois elle sera plus souvent appliquée aux dispositifs dont le capteur comporte deux cellules. Un tel capteur comprend un volume délimité par un intercalaire poreux et par une première cellule ou cellule de pompage séparant le volume d'une zone occupée par le gaz où la pression partielle d'oxygène est à mesurer, et une seconde cellule ou cellule sensible, en contact avec la pression de référence, dans laquelle la tension représentative est prélevée sur des électrodes encadrant la seconde cellule. Le courant de pompage traverse alors deux électrodes encadrant la cellule de pompage.

De façon générale, on peut considérer que le dispositif tire ses principaux avantages de que le contrôleur numérique a la complète maîtrise du courant de pompage Ip, aussi bien en mode normal d'asservissement que lors de phases transitoires (mise en action, protection de la sonde, diagnostics...) et qu'il assure la production de ce courant plutôt que la relecture de celui-ci quand il est produit par des moyens extérieurs comme dans les architectures actuelles.

Par ailleurs le dispositif :

- d'une part tire avantage d'une partie analogique fournissant, à partir de la tension Vs du capteur, un signal amplifié ayant heureusement une composante dérivée dont la précision n'est pas dégradée par une conversion analogique-numérique située en aval de l'élaboration de cette composante dérivée,
- d'autre part permet de réaliser la production du courant Ip par une modulation temporelle dans le contrôleur numérique, modulation qui, associée à un filtre passe-bas et un générateur de courant piloté par la commande filtrée fournit un courant de pompage Ip à variation continue, progressive et non hachée, sous maîtrise du contrôleur numérique.

La production dudit courant Ip s'effectue alors sous une forme n'exigeant pas de convertisseur numérique-analogique intégré, bien qu'un tel convertisseur constitue une solution lorsque le contrôleur numérique en dispose.

Il existe des phases de fonctionnement du dispositif au cours desquelles le capteur risquerait d'être endommagé si le mode de fonctionnement normal était maintenu. Par exemple le régime de fonctionnement normal d'un dispositif à deux cellules consiste à maintenir la tension $V_s$ mesurée sur la seconde cellule à une valeur de référence et à déduire la teneur en oxygène de la valeur du courant de pompage $I_p$. Ce mode de fonctionnement impose que la sonde soit à une température suffisante, généralement entre 650°C et 900°C. Le capteur est porté à cette température par une résistance chauffante. Pendant un intervalle de temps à partir du début du chauffage, le dispositif est inopérant parce qu'à température trop basse. Il est souhaitable cependant de disposer de mesures significatives aussitôt que possible, même si elles sont moins précises, et d'une indication de l'instant où elles sont utilisables.

De plus, diverses conditions de fonctionnement rendent le mode normal de fonctionnement susceptible de dégrader le capteur parce qu'elles conduisent à une tension excessive $V_p$ sur la cellule de pompage.

Dans un mode avantageux de réalisation de l'invention, le dispositif permet d'obtenir des mesures dégradées, mais cependant utilisables, dans des conditions qui rendent le mode normal inapproprié.

Pour cela les moyens de contrôle/commande peuvent comporter des moyens de commutation entre un asservissement à valeur constante de la tension de la cellule sensible et une limitation de la tension de la cellule de pompage à une valeur plafond, propre à protéger le capteur.

En particulier, le contrôleur peut être prévu pour initialiser le fonctionnement en commandant le courant de pompage $I_p$ pour limiter la tension $V_p$ sur la cellule de pompage à une valeur maximale compatible avec la protection du capteur, puis pour répéter une séquence :

- d'asservissement du courant de pompage sur la tension appliquée à la cellule sensible avec contrôle que la tension sur la cellule de pompage reste inférieure au plafond, et
- de retour à un pilotage du courant de pompage pour qu'il soit compatible avec le plafond dans la mesure où ce plafond est dépassé par pilotage lors de l'asservissement de la tension $V_s$ appliquée à la cellule sensible.

De façon plus générale, le contrôleur numérique peut être prévu pour utiliser les tensions mesurées aux bornes des deux cellules et pour tenir compte du courant de pompage $I_p$ afin de remplir des fonctions supplémentaires, telles que :

- estimation de la température de la sonde, pour déterminer l'instant où elle devient utilisable,
- diagnostic de vieillissement,
- fonctionnement en mode dégradé, avec asservissement de la tension $V_p$ de la cellule de pompage, et non plus de $V_s$.

Lors du fonctionnement en mode dégradé, l'asservissement de $V_p$ peut être effectué non pas sur une valeur fixe, mais sur une valeur choisie pour tenir compte d'autres paramètres ou de la fonction à remplir, telle que calibrage, diagnostic ou fonctionnement en mode dégradé par suite d'une ambiance anormale.

Les caractéristiques ci-dessus ainsi que d'autres apparaîtront mieux à la lecture de la description qui suit de modes particuliers de réalisation donnés à titre d'exemples non limitatifs. La description se réfère aux dessins qui l'accompagnent, dans lesquels :

- les figures 1 et 2, déjà mentionnées, montrent respectivement un capteur à deux cellules et un capteur à une cellule ;
- la figure 3 est un diagramme montrant les courbes de variation du courant de pompage en fonction de la tension sur la cellule de pompage, pour plusieurs pressions partielles d'oxygène dans l'atmosphère ambiante ;
- la figure 4 est un schéma de principe d'un dispositif conforme à l'invention ;
- la figure 5 est un schéma destiné à faire apparaître la répartition des fonctions entre matériel et logiciel, dans un mode particulier de réalisation ;
- la figure 6 montre l'allure de la variation de la résistance de la cellule de pompage en fonction de la température, pour un mélange riche et un mélange relativement pauvre.

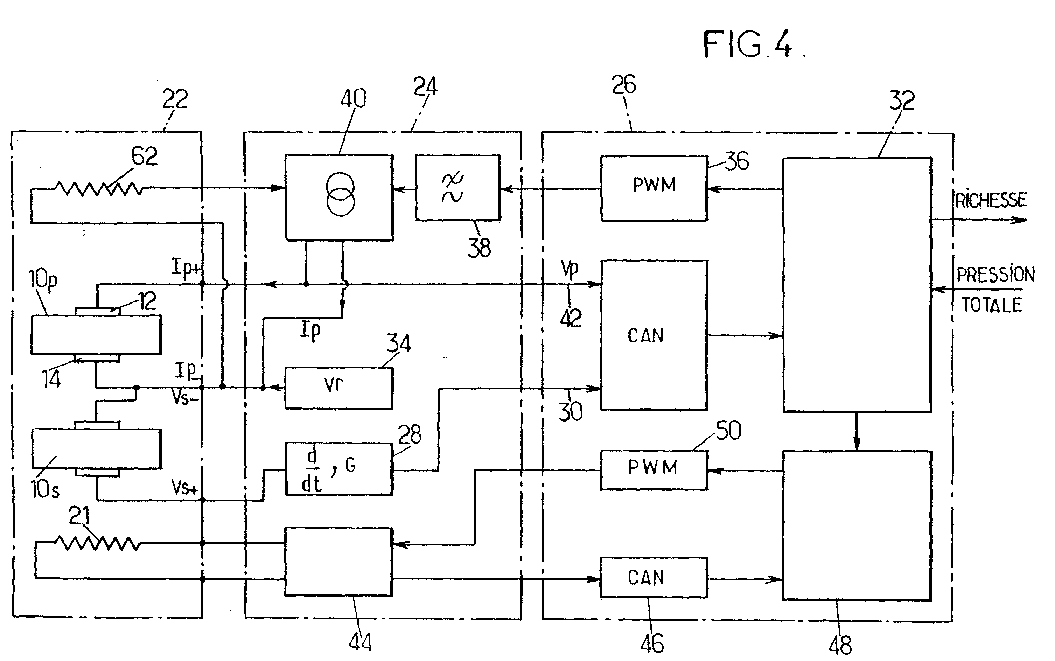

Le dispositif dont la constitution générale est montrée en figure 4 comporte un capteur 22 dont la constitution est celle montrée en figure 1. Pour cette raison, les éléments correspondant à ceux de la figure 1 seront désignés par le même numéro de référence.

Les moyens de contrôle/commande associés au capteur 22 peuvent être regardés comme ayant une partie "matériel" ou câblée 24 et un contrôleur numérique 26 constituant une partie "logiciel".

Lors du fonctionnement normal et stabilisé du dispositif, les moyens de contrôle/commande reçoivent la tension aux bornes de la cellule sensible $10_s$, apparaissant entre des bornes Vs- et Vs+ et fournissent au capteur un courant de pompage qui circule entre les bornes Ip+ et Ip-. Les points de masse et les alimentations ne sont pas représentés sur la figure 4 pour plus de simplicité.

La tension $V_s$ est traitée dans la partie "matériel" 24 par un circuit analogique 28 d'introduction d'une composante dérivée et d'amplification avec un gain G. Le signal ainsi traité est appliqué au contrôleur numérique 26. Il y est numérisé par un CAN qui reçoit le signal sur une entrée 30. Dans le cas de l'application du dispositif à 1a commande d'un moteur à combustion interne, il suffit généralement d'un convertisseur sur huit à dix bits. Le contrôleur comporte un logiciel, schématisé en 32, de pilotage de l'asservissement de $V_s$ à une valeur constante, qui peut être fixée par un générateur 34 de tension de référence $V_r$. L'asservissement est avantageusement choisi de façon que la valeur de consigne

de $V_s$ soit sensiblement au milieu d'une partie linéaire de la caractéristique $I_p(V_s)$.

Le logiciel 32 est prévu pour fournir un signal d'attaque d'un circuit 36 fournissant un signal de tension à modulation temporelle, généralement à modulation de largeur d'impulsion, dite PWM. De tels composants numériques et des programmes permettant de transformer un signal numérique d'entrée en un signal ainsi modulé sont disponibles couramment.

Le signal modulé en largeur d'impulsions, de rapport cyclique variable, est appliqué à un filtre passe-bas 38 de façon à le transformer en un signal non haché qui est appliqué à un générateur de courant continu 40 fournissant le courant $I_p$. Etant donné que les capteurs présentent habituellement une dispersion de sensibilité de la caractéristique courant de pompage Ip en fonction de la richesse, le générateur de courant 40 peut être prévu pour tenir compte d'une résistance de compensation 62 intégrée dans le capteur pour normaliser la caractéristique Ip en fonction de la richesse. Toujours dans le cas particulier d'un dispositif destiné à être incorporé à un système de contrôle de moteur, une modulation à largeur d'impulsions codées sur douze bits permet une résolution suffisante. Le bit le moins significatif pourra par exemple correspondre à une variation du courant $I_p$ de l'ordre de 3 µA.

Comme on l'a indiqué plus haut, certaines phases de fonctionnement rendent souhaitable d'asservir la tension $V_p$ plutôt que la tension $V_p$. Pour permettre ce mode de fonctionnement, le contrôleur numérique 26 peut comprendre un CAN dont une entrée analogique 42 reçoit la tension $V_p$ prélevée sur la borne $I_p^+$.

Un fonctionnement satisfaisant du capteur impose que les cellules soient à une température appropriée, généralement comprise entre 650°C et 900°C. Le maintien à cette température peut être réalisé par commande de la chaleur dissipée dans la résistance de chauffage 21. Cette commande peut comporter un asservissement mettant en oeuvre le contrôleur numérique 26. Dans le cas schématisé en figure 4, la résistance 21 est alimentée par un circuit analogique 44 de commande de puissance et de mesure de courant relié à une entrée analogique d'un convertisseur analogique-numérique 46 du contrôleur pouvant être le même que celui qui est muni des entrées 30 et 42. Un logiciel 48 du contrôleur remplit les fonctions d'asservissement et commande un modulateur de sortie 50, fournissant un signal modulé en largeur d'impulsions commandant le circuit 44.

Le mode de fonctionnement de l'asservissement de température, visant à maintenir les cellules à une température déterminée, peut être le suivant.

Initialement, on charge dans le contrôleur numérique 26, dans la partie "logiciel" 32, des lois de variation de la résistance de la cellule de pompage en fonction de la température, pour plusieurs teneurs en oxygène (correspondant à plusieurs enrichissements différents du mélange, dans le cas de l'alimentation d'un moteur). En fonctionnement normal, on sait qu'on recherche un mélange pauvre, conduisant à la présence d'oxygène résiduel dans les gaz d'échappement.

Le logiciel 32 comporte alors un programme provoquant périodiquement l'application d'un incrément de courant $\Delta I_p$ du courant $I_p$. Cet incrément provoque une variation $\Delta V_p$ de la tension $V_p$, prélevée sur la sortie Ip+. Le contrôleur 26 peut déterminer cette variation $\Delta V_p$ par différence entre les deux valeurs numériques successives qui apparaissent à la sortie du CAN d'entrée 42. La résistance R de la cellule de pompage est donnée par le rapport $\Delta V_p/\Delta I_p$. La température s'en déduit par référence à la table de correspondance, mémorisée sous forme numérique dans le logiciel 32. L'information correspondante peut être transmise au logiciel de pilotage 48 pour modifier en conséquence le courant traversant la résistance de chauffage 21.

Dans le cas d'un capteur à une seule cellule, on cherchera à réguler une tension $E_p$, à une valeur qui sera par exemple d'environ 450 mV, à partir des valeurs connues de $V_p$ et de $I_p$. On utilise alors une estimation de la résistance R de la cellule unique donnée par :

$$R = \Delta V_p/\Delta I_p$$

Le dispositif de la figure 4 permet également de protéger le capteur tout en conservant un fonctionnement dégradé, en limitant la tension $V_p$. Pour cela, le contrôleur numérique compare $V_p$ à une valeur maximale mémorisée, qui peut être fixe ou varier en fonction de paramètres extérieurs. Si $V_p$ tend à dépasser la valeur de seuil, le mode d'asservissement est modifié. Le courant $I_p$ est commandé pour maintenir la tension $V_p$ à la valeur maximale autorisée. Cela implique généralement de revenir à intervalles réguliers à une tentative d'asservissement du courant de pompage à la tension $V_s$, avec retour immédiat à l'asservissement de $V_p$ en cas de dépassement de la valeur tolérée pour $V_p$.

L'initialisation du fonctionnement du dispositif (capteur froid) peut s'effectuer de la façon suivante, au moins dans le cas où le dispositif est intégré à un système de contrôle moteur. Dans ce cas, le démarrage s'effectue avec un mélange riche, c'est-à-dire avec une loi de variation de l'impédance en fonction de la température qui est celle donnée en tirets sur la figure 6. Le contrôleur numérique 26 est prévu pour tenter d'abord de faire fonctionner la sonde avec asservissement de la tension Vp et avec évaluation de la résistance R, à une cadence élevée. Dans ce cas des mesures significatives, bien que moins précises qu'en fonctionnement normal, peuvent être obtenues et validées dès que la mesure de la résistance R fait apparaître que la température a atteint une première valeur, par exemple entre 550° et 650°C. Le passage à une tentative d'asservissement de Vs peut être programmé pour intervenir dès une valeur déterminée de la résistance R.

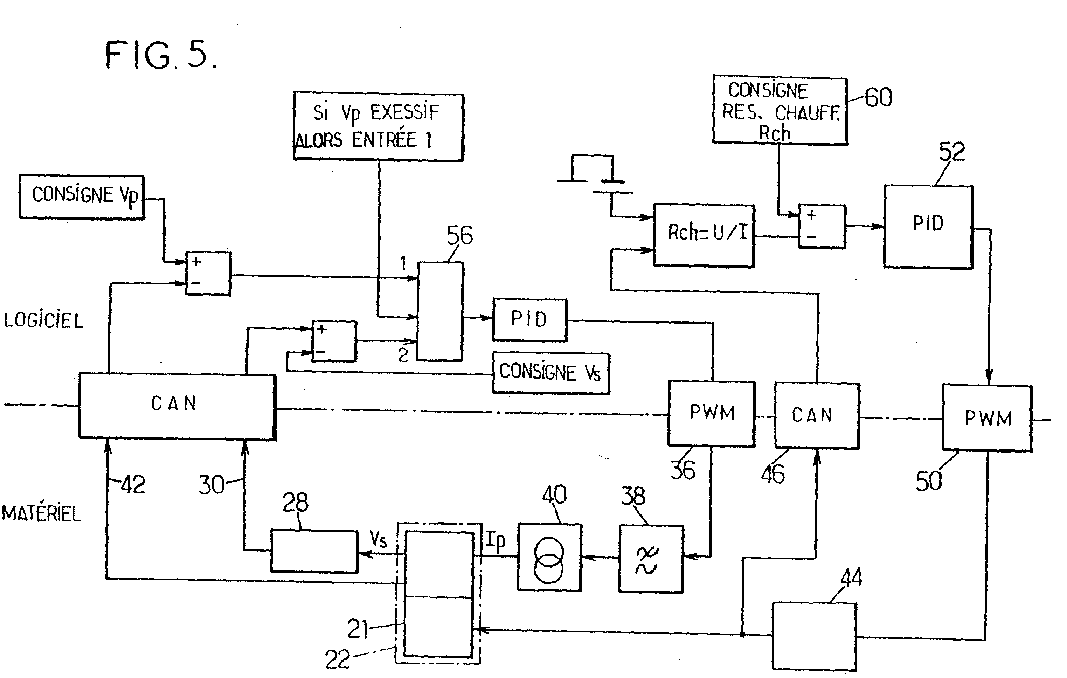

La répartition des fonctions entre la partie matériel et la partie logiciel peut être celle indiquée sur la figure 5, où les fonctions sont désignées par le même numéro de référence que les composants correspondants sur la figure 4. L'interface entre la partie "logiciel" et la partie "matériel" comporte les entrées 30 et 42 et l'entrée du convertisseur analogique-numérique 46 ; les convertisseurs peuvent avoir une sortie sur 10 bits. Il comporte également les circuits de modulation en largeur d'impulsions 36 et 50. Le circuit de modulation 36 peut notamment fonctionner à une fréquence de 5 kHz et avoir une sortie sur 12 bits. Le circuit de modulation 50 aura généralement une fréquence beaucoup plus faible, par exemple d'environ 30 Hz.

La régulation de la résistance de chauffage peut s'effectuer de façon classique, pour maintenir la résistance à une valeur déterminée fixée par une consigne 60. Un circuit de stabilisation du type proportionnel-intégral-dérivé 52 peut être prévu.

Le contrôleur comporte, comme il a été indiqué plus haut, un programme permettant d'effectuer un test sur la température du capteur et sur la valeur de Vp, orientant en 56 la régulation soit vers le maintien de Vs à une valeur de consigne pour Vs (entrée 2), soit pour le maintien de Vp à une valeur de consigne (entrée 1).

## Revendications

**1.** Dispositif de mesure de la teneur d'un milieu en oxygène, comprenant :

un capteur (10s) capable de fournir une tension représentative du rapport entre une pression d'oxygène de référence et la pression d'oxygène dans un volume du capteur et muni d'électrodes permettant de faire passer un courant de pompage (Ip) contrôlant ladite pression d'oxygène dans le volume et des moyens de contrôle/commande ayant un contrôleur numérique (26) recevant ladite tension représentative sur une entrée et aptes à fournir le courant de pompage,

**caractérisé en ce que** les moyens de contrôle/commande fournissent le courant de pompage (Ip) sous forme d'un courant à variation continue et progressive, non haché, piloté par le contrôleur numérique (26) de façon à asservir ladite tension d'entrée à une valeur déterminée.

**2.** Dispositif selon la revendication 1, **caractérisé en ce que** lesdits moyens de contrôle/commande comprennent, entre le contrôleur numérique (26), qui fournit une tension de commande à modulation temporelle, et l'entrée du capteur, un filtre passe-bas (38) et un générateur de courant (40).

**3.** Dispositif selon la revendication 2, **caractérisé en**

**ce que** le contrôleur numérique (26) fournit en sortie un signal de pilotage des moyens de contrôle/commande constitué par une tension modulée en largeur d'impulsions.

4. Dispositif selon la revendication 1, 2 ou 3, **caractérisé en ce que** les moyens de contrôle/commande comprennent un circuit introduisant une composante dérivée avant application au contrôleur numérique de ladite tension représentative.

5. Dispositif selon l'une quelconque des revendications 1, 2, 3 et 4, **caractérisé en ce que** les moyens de contrôle/commande comprennent un circuit introduisant sur ladite tension représentative un gain à la composante proportionnelle, et à la composante dérivée si elle est présente, avant l'application au contrôleur numérique.

6. Dispositif selon l'une quelconque des revendications 1 à 5, **caractérisé en ce que** le capteur comporte une seule cellule (10p) séparant le volume d'une zone où règne la pression de référence, **en ce que** la tension représentative (Vp) est prélevée entre deux électrodes encadrant la cellule, et **en ce que** le courant de pompage (Ip) est appliqué à la même cellule.

7. Dispositif selon l'une quelconque des revendications 1 à 5, **caractérisé en ce que** le capteur comprend un volume (18) délimité par un intercalaire poreux (16) et par une première cellule ou cellule de pompage (10p) séparant le volume d'une zone occupée par le gaz où la pression partielle d'oxygène est à mesurer, et une seconde cellule sensible (10s) en contact avec la pression de référence, **en ce que** la tension représentative (Vs) est prélevée sur des électrodes encadrant la seconde cellule (10s) et **en ce que** le courant de pompage traverse deux électrodes encadrant la première cellule.

8. Dispositif suivant la revendication 7, **caractérisé en ce que** les moyens de contrôle/commande comportent des moyens de passage entre un asservissement à valeur constante de la tension de la seconde cellule sensible vers une limitation de la tension de la cellule de pompage à une valeur plafond prédéterminée pour protéger le capteur.

9. Dispositif selon la revendication 7 ou 8, **caractérisé en ce que** le contrôleur est prévu pour initialiser le fonctionnement en commandant le courant de pompage pour limiter la tension (Vp) sur la cellule de pompage à une valeur maximale compatible avec la protection du capteur et en répétant une séquence d'asservissement du courant de pompage sur la tension (Vs) sur la seconde cellule avec contrôle que la tension (Vp) reste inférieure au plafond et avec retour à un pilotage du courant de pompage pour qu'il soit compatible avec le plafond de Vp dans la mesure où le plafond est dépassé par pilotage par asservissement de Vs.

10. Dispositif selon l'une quelconque des revendications précédentes, **caractérisé en ce que** lesdits moyens de contrôle/commande comprennent des moyens d'évaluation de la résistance de la cellule de pompage, ayant des moyens pour envoyer périodiquement un incrément temporaire de courant de pompage (ΔIp) et pour mesurer la variation de tension correspondante (ΔVp) de ladite cellule.

11. Dispositif selon l'une quelconque des revendications précédentes, **caractérisé en ce que** le contrôleur assure également des fonctions de contrôle moteur.

## Patentansprüche

1. Vorrichtung zum Messen des Sauerstoffgehalts eines Mediums, umfassend:

   einen Fühler (10s), der eine repräsentative Spannung für das Verhältnis zwischen einem Bezugssauerstoffdruck und dem Sauerstoffdruck in einem Volumen des Fühlers liefern kann und mit Elektroden versehen ist, die es gestatten, einen Pumpstrom (Ip) fließen zu lassen, der diesen Sauerstoffdruck in dem Volumen steuert, und
   Überwachungs-/Steuermittel mit einem digitalen Controller (26), die diesen repräsentativen Strom an einem Eingang empfangen und den Pumpstrom liefern können,

   **dadurch gekennzeichnet, dass** die Überwachungs/Steuermittel den Pumpstrom (Ip) in Form eines nichtzerhackten Stroms mit kontinuierlicher und progressiver Änderung liefern, der durch den digitalen Controller (26) so gesteuert wird, dass die Eingangsspannung auf einen bestimmten Wert eingeregelt wird.

2. Vorrichtung nach Anspruch 1, **dadurch gekennzeichnet, dass** die Überwachungs-/Steuermittel zwischen dem digitalen Controller (26), der eine Steuerspannung mit zeitlicher Modulation liefert, und dem Eingang des Fühlers ein Tiefpassfilter (38) und einen Stromgenerator (40) umfassen.

3. Vorrichtung nach Anspruch 2, **dadurch gekennzeichnet, dass** der digitale Controller (26) am Ausgang ein Signal zur Steuerung der Überwachungs-/Steuermittel liefert, das aus einer impulsbreitenmodulierten Spannung besteht.

**4.** Vorrichtung nach Anspruch 1, 2 oder 3, **dadurch gekennzeichnet, dass** die Überwachungs-/Steuermittel eine Schaltung aufweisen, die vor Anlegen der repräsentativen Spannung an den digitalen Controller eine abgeleitete Komponente einführt.

**5.** Vorrichtung nach einem der Ansprüche 1, 2, 3 und 4, **dadurch gekennzeichnet, dass** die Überwachungs/Steuermittel eine Schaltung umfassen, die vor dem Anlegen an den digitalen Controller an dieser repräsentativen Spannung eine Verstärkung der proportionalen Komponente und der abgeleiteten Komponente, wenn diese vorhanden ist, einführt.

**6.** Vorrichtung nach einem der Ansprüche 1 bis 5, **dadurch gekennzeichnet, dass** der Fühler eine einzige Zelle (10p) aufweist, die das Volumen von. einer Zone trennt, in der der Bezugsdruck herrscht, dass die repräsentative Spannung (Vp) zwischen zwei zu beiden Seiten der Zelle angeordneten Elektroden abgenommen wird und dass der Pumpstrom (Ip) an dieselbe Zelle angelegt wird.

**7.** Vorrichtung nach einem der Ansprüche 1 bis 5, **dadurch gekennzeichnet, dass** der Fühler ein Volumen (18) aufweist, das von einer porösen Zwischenlage (16) und von einer ersten Zelle oder Pumpzelle (10p) abgegrenzt wird, die das Volumen von einer vom Gas eingenommen Zone trennt, in der der Sauerstoffteildruck zu messen ist, sowie eine zweite empfindliche Zelle (10s), die mit dem Bezugsdruck in Kontakt ist, dass die repräsentative Spannung (Vs) an zu beiden Seiten der zweiten Zelle (10s) angeordneten Elektroden abgenommen wird, und dass der Pumpstrom zwei zu beiden Seiten der ersten Zelle angeordnete Elektroden durchquert.

**8.** Vorrichtung nach Anspruch 7, **dadurch gekennzeichnet, dass** die Überwachungs-/Steuermittel Mittel zum Umschalten zwischen einer Einregelung der Spannung der zweiten empfindlichen Spannung auf einen konstanten Wert und einer Begrenzung der Spannung der Pumpzelle auf einen vorbestimmten Dachwert zum Schutz des Fühlers aufweisen.

**9.** Vorrichtung nach Anspruch 7 oder 8, **dadurch gekennzeichnet, dass** der Controller dafür ausgelegt ist, den Betrieb auszulösen, indem der Pumpstrom gesteuert wird, um die Spannung (Vp) auf der Pumpzelle auf einen mit dem Schutz des Fühlers kompatiblen Höchstwert zu begrenzen, und indem eine Sequenz der Einregelung des Pumpstroms auf die Spannung (Vs) auf der zweiten Zelle wiederholt wird, und zwar mit Überwachung, dass die Spannung (Vp) unterhalb des Dachs bleibt, und mit Rückkehr zu einer solchen Steuerung des Pumpstroms, dass er mit dem Dach von Vp kompatibel ist, wenn das Dach durch Steuerung bei der Einregelung von Vs überschritten wird.

**10.** Vorrichtung nach einem der vorhergehenden Ansprüche, **dadurch gekennzeichnet, dass** die Überwachungs/Steuermittel Mittel zur Ermittlung des Widerstands der Pumpzelle umfasst, die Mittel aufweisen, um periodisch ein vorübergehenden Pumpstrominkrement ($\Delta$Ip) zu liefern und um die entsprechende Spannungsänderung ($\Delta$Vp) dieser Zelle zu messen.

**11.** Vorrichtung nach einem der vorhergehenden Ansprüche, **dadurch gekennzeichnet, dass** der Controller auch Motorsteuerfunktionen erfüllt.

## Claims

**1.** Apparatus for measuring the oxygen content of a medium, the apparatus comprising:

a sensor (10s)capable of delivering a voltage representative of the ratio between a reference oxygen pressure and the oxygen pressure in a volume of the sensor, and provided with electrodes enabling to pass a pumping current (Ip) for controlling said oxygen pressure in the volume; and
monitoring / control means including a digital controller (26) receiving said representative voltage on an input and suitable for delivering the pumping current;

**characterized in that** the monitoring / control means deliver the pumping current (Ip) in the form of a current that varies continuously and progressively, without interruptions, governed by the digital controller (26)in such a manner as to servo-control said input voltage to a determined value.

**2.** Apparatus according to claim 1, **characterized in that** said monitoring / control means comprise, between the digital controller (26) which delivers a time-modulated control voltage and the input of the sensor, a lowpass filter (38)and a current generator (40).

**3.** Apparatus according to claim 2, **characterized in that** the digital controller delivers at its output a signal for governing the monitoring and control means, which signal is constituted by a pulse width modulated voltage.

**4.** Apparatus according to claim 1, 2, or 3, **characterized in that** the monitoring / control means include a circuit that introduces a derivative component prior to said representative voltage being applied to the digital controller.

5. Apparatus according to any one of claims 1, 2, 3, and 4, **characterized in that** the monitoring / control means include a circuit introducing gain to the proportional component of said representative voltage, and gain to the derivative component if present, prior to application to the digital controller.

6. Apparatus according to any one of claims 1 to 5, **characterized in that** the sensor comprises a single cell (10s) separating the volume of a zone in which the reference pressure exists, **in that** the representative voltage (Vp) is taken from two electrodes on either side of the cell, and **in that** the pumping current (Ip) is applied to the same cell.

7. Apparatus according to any one of claims 1 to 5, **characterized in that** the sensor has a volume(18) defined by a porous intermediate sheet and by a first or "pumping" cell (10b) separating the volume from a zone occupied by the gas where the oxygen partial pressure is to be measured, and a second "sensitive" cell (10s) in contact with the reference pressure, **in that** the representative voltage (Vs) is taken from electrodes straddling the second cell (10s) and **in that** the pumping current passes through two electrodes straddling the first cell.

8. Apparatus according to claim 7, **characterized in that** the monitoring and control means comprise means for changing-over from servo-controlling the voltage of the sensitive second cell to a constant value to limiting the voltage of the pumping cell to a predetermined ceiling value for protecting the sensor.

9. Apparatus according to claim 7 or 8, **characterized in that** the controller is designed to initialize operation by controlling the pumping current to limit the voltage (Vp) across the pumping cell to a maximum value compatible with protecting the sensor, and in repeating a pumping current servo-control sequence on the voltage (Vs) across the second cell while verifying that the voltage (Vp) remains below a ceiling, and returning to governing the pumping current so that it is compatible with the ceiling of $V_p$ insofar as the ceiling is exceeded by servo-control governing of $V_s$.

10. Apparatus according to any preceding claim, **characterized in that** said monitoring / control means include means for evaluating the resistance of the pumping cell, having means for periodically applying a temporary increment ($\Delta$Ip) to the pumping current and for measuring the corresponding change

($\Delta$Vp) in the voltage of said cell.

11. Apparatus according to any preceding claim, **characterized in that** the controller also performs engine control functions.

FIG.1.

GAZ

21

10p
16
10s
18
20

12
14
zp
Vp
cp
Vs

FIG.2.

AIR
ATMOSPH.

10p
16
GAZ

18

Ip
Vp

FIG.3.

Ip

+PAUVRE

Vp

+RICHE

FIG.6.

R

IMPÉDANCE ( ohm)

300

200

100

MÉLANGE PAUVRE
AIR / COMB.:20

MÉLANGE RICHE
AIR / COMB. :11,5

Tp (°C )

600    700    800    900    1000

FIG.4.

FIG. 5.

CONSIGNE Vp

Si Vp EXESSIF ALORS ENTRÉE 1

CONSIGNE RES. CHAUFF. Rch — 60

PID — 52

PWM — 50

CAN — 46

CAN

PID

CONSIGNE Vs

Rch=U/I

PWM — 36

44

42

40

38

30

28

22

21

Ip

Vs

1

2

56

LOGICIEL

MATÉRIEL